# EUROPÄISCHE PATENTSCHRIFT

(11) **EP 3 551 718 B1**
(45) Veröffentlichungstag und Bekanntmachung des Hinweises auf die Patenterteilung: **13.10.2021**
(21) Anmeldenummer: 17807808.5
(22) Anmeldetag: 24.11.2017
(51) Int. Cl.: C09K 8/524, C11D 1/722

(54) **WÄSSRIGE ZUSAMMENSETZUNGEN VON PARAFFININHIBITOREN**
AQUEOUS COMPOSITIONS OF PARAFFIN INHIBITORS
COMPOSITIONS AQUEUSES D'INHIBITEURS DE PARAFFINE

(30) Priorität: 07.12.2016 EP 16202577
(43) Veröffentlichungstag der Anmeldung: 16.10.2019
(73) Patentinhaber: BASF SE, 67056 Ludwigshafen am Rhein (DE)
(72) Erfinder: BOHRES, Edward, 67056 Ludwigshafen (DE)
(74) Vertreter: BASF IP Association
(86) Internationale Anmeldenummer: PCT/EP2017/080302
(87) Internationale Veröffentlichungsnummer: WO 2018/104071

(56) Entgegenhaltungen:
- EP-A1- 0 214 786
- WO-A1-2008/012242
- WO-A1-2008/125588

## Beschreibung

Die vorliegende Erfindung betrifft eine wässrige Zusammensetzung umfassend mindestens eine kontinuierliche wässrige Phase sowie darin verteilte Partikel einer Paraffininhibitor-Komponente, welche mit einer Kombination von mindestens 3 Tensiden stabilisiert wird. Sie betrifft weiterhin ein Verfahren zur Herstellung derartiger Zusammensetzungen sowie die Verwendung derartiger Zusammensetzungen als Pour-Point Depressant und Wachsinhibitor.

Die Lagerstättentemperatur von Öllagerstätten liegt in der Regel oberhalb der Umgebungstemperatur an der Erdoberfläche. Dem entsprechend weisen geförderte Rohöle in der Regel eine erhöhte Temperatur auf und kühlen nach dem Fördern naturgemäß mehr oder weniger schnell auf die Umgebungstemperatur ab.

Rohöle enthalten je nach ihrer Herkunft unterschiedliche Anteile von so genannten Wachsen, welche im Wesentlichen aus langkettigen n-Paraffinen bestehen. Der Anteil derartiger Paraffine kann je nach Art des Rohöls typischerweise 1 bis 30 Gew.-% des Rohöls betragen. Die Paraffine können beim Abkühlen des Rohöls nach der Förderung in Form von Plättchen kristallisieren und ausfallen. Die niedrigste Temperatur, bei der eine Probe eines Öls beim Abkühlen gerade noch fließt, wird als Pour-Point ("Fließgrenze") bezeichnet. Für die Messung des Pour-Points werden standardisierte Messverfahren eingesetzt. Wachsreiche Erd-ölsorten können einen Pour-Point bis ca. 50° C aufweisen.

Kristallisierte Paraffine beeinträchtigen die Fließfähigkeit des Öls erheblich. Ausgefallene Paraffine können Filter, Pumpen, Rohrleitungen und andere Anlagen verstopfen oder sich in Tanks ablagern und verursachen so hohen Reinigungsaufwand.

Es ist bekannt, den Pour-Point von Rohölen durch geeignete Zusätze zu erniedrigen. Hierdurch kann verhindert werden, dass beim Abkühlen geförderten Rohöls Paraffine ausfallen und sich ablagern können. Derartige Additive werden beispielsweise als Pour-Point-Depressants, Paraffin-Inhibitoren, Wachs-Inhibitoren oder Fließverbesserer bezeichnet. Hierbei handelt es sich in der Regel um Polymere.

Beispiele von Polymeren zur Verwendung als Paraffininhibitoren bzw. Pour-Point-Depressants umfassen Copolymere aus Ethylen, Vinylestern und Alkyl(meth)acrylaten oder Pfropfcopolymere erhältlich durch Polymerisation von Alkyl(meth)acrylaten in Gegenwart von Ethylen-Vinylester-Copolymeren, wie beispielsweise von WO 2014/095412 A1, WO 2014/095408 A1 oder WO 2015/124529 A1 beschrieben. Weitere Beispiele umfassen Copolymere aus langkettigen Olefinen und Maleinsäureanhydrid, wobei die einpolymerisierten Maleinsäureanhydrideinheiten in einem zweiten Schritt mit langkettigen Alkoholen, beispielsweise Behenylalkohol umgesetzt werden, wie beispielsweise von GB 1 468 588, EP 214 786 A1 und EP 1 746 147 A1 offenbart.

Derartige Additive zur Verwendung als Paraffininhibitoren bzw. Pour-Point-Depressants sind häufig wachsartige, feste Produkte. Sie müssen daher zum Einsatz aufgeschmolzen und geeignet formuliert werden. Dies bedeutet zusätzlichen apparativen und/oder personellen Aufwand für die Anwender, den diese gerne vermeiden möchten. Dies ist insbesondere von Bedeutung, wenn Platz knapp ist, wie beispielsweise auf einer Erdölplattform. Anwender verlangen daher häufig einsatzfertige Formulierungen.

Bei einsatzfertigen Formulierungen kann es sich beispielsweise um Lösungen von Pour-Point-Depressants in organischen Lösemitteln, insbesondere Kohlenwasserstoffen handeln.

Bei einsatzfertigen Formulierungen kann es sich weiterhin um wässrige Zusammensetzungen handeln, bei denen feste Partikel von Paraffininhibitoren in wässrigen Zusammensetzungen verteilt sind. Derartige Zusammensetzungen von Pour-Point-Depressants bzw. Paraffininhibitoren sind bekannt, beispielsweise aus DE 26 12 757 A1, WO 98/51731 A1 oder WO 2008/125588 A1. Wässrige Zusammensetzungen sind bei Anwendern sehr beliebt, weil das Arbeiten mit organischen Lösemitteln vermieden wird.

An wässrige Zusammensetzungen von Pour-Point-Depressants werden eine Reihe von Anforderungen gestellt. Sie sollen einerseits einen möglichst hohen Gehalt an Pour-Point-Depressant aufweisen, um Transportkosten und Lagerkosten zu sparen. Dies ist insbesondere von Bedeutung, wenn Lagerplatz knapp ist, wie beispielsweise auf einer Erdölplattform. Je höher die Konzentration, desto leichter erstarren die wässrigen Zusammensetzungen jedoch. Weiterhin sollen die Zusammensetzungen trotz einer relativ hohen Konzentration stabil sein. Schließlich müssen geeignete Zusammensetzungen auch noch bei Temperaturen unterhalb des Gefrierpunktes fließfähig sein. Dies ist wichtig, wenn sie in kalter Umgebung, beispielsweise in arktischen Regionen eingesetzt werden sollen.

Aufgabe der Erfindung war es daher, verbesserte wässrige Zusammensetzungen von Pour-Point-Depressants zur Verwendung bei tiefen Temperaturen zur Verfügung zu stellen. Es sollte sich insbesondere um wässrige Formulierungen handeln, die auch noch bei Temperaturen von weniger als 0° C, beispielsweise im Bereich von mehr als -20° C bis 0° C flüssig sind.

Dementsprechend wurden wässrige Zusammensetzungen gefunden, welche mindestens
(1) eine kontinuierliche wässrige Phase umfassend Wasser sowie ein mit Wasser mischbares organisches Lösemittel,
(2) darin verteilte Partikel einer Paraffininhibitor-Komponente mit einem Schmelzpunkt von 30° C bis 95° C, sowie
(3) Tenside,
umfassen, und wobei
- die wässrige Phase einen Schmelzpunkt von nicht mehr als -20° C aufweist,
- es sich bei der Paraffininhibitor-Komponente um eine Mischung umfassend mindestens
   o ein organisches, mit Wasser nicht mischbares Lösemittel, sowie
   o einen polymeren, wasserunlöslichen Paraffininhibitor (X) handelt, umfassend als Monomere
      ▪ α-Olefine mit 14 bis 32 Kohlenstoffatomen, sowie
      ▪ monoethylenisch ungesättigte Monomere umfassend Carboxylatgruppen handelt, wobei die Carboxylatgruppen ganz oder teilweise mit aliphatischen, cycloaliphatischen und/oder aromatischen Alkoholen verestert sind, mit der Maßgabe, dass es sich bei mindestens 50 mol % der Alkohole um lineare aliphatische Alkohole mit 16 bis 32 Kohlenstoffatomen handelt,
- die Menge der Paraffininhibitor-Komponente 20 bis 40 Gew.-% bezogen auf die Summe aller Komponenten der Zusammensetzung beträgt,
- es sich bei den Tensiden mindestens um drei voneinander verschiedene Tenside (A), (B) und (C) handelt, welche wie folgt definiert sind:
   (A) mindestens ein nichtionisches Tensid der allgemeinen Formel R¹-(AO)ₓH, wobei
      ▪ es sich bei R¹ um einen linearen Alkylrest mit 8 bis 20 Kohlenstoffatomen handelt,
      ▪ AO unabhängig voneinander für C₂- bis C₄-Alkylenoxideinheiten stehen, mit der Maßgabe, dass es sich bei mindestens 80 mol % der AO-Einheiten um Ethylenoxideinheiten (EO) handelt, und
      ▪ x für eine Zahl von 5 bis 20 steht,
   (B) mindestens ein Tensid ausgewählt aus der Gruppe von
      (B1) nichtionischen Tensiden der allgemeinen Formel R²-(AO)_{y}H, wobei
         ▪ es sich bei R¹ um einen verzweigten Alkylrest mit 8 bis 20 Kohlenstoffatomen handelt,
         ▪ AO unabhängig voneinander für C₂- bis C₄-Alkylenoxideinheiten stehen, mit der Maßgabe, dass es sich bei mindestens 80 mol % der AO-Einheiten um Ethylenoxideinheiten (EO) handelt, und
         ▪ y für eine Zahl von 5 bis 20 steht,
      (B2) nichtionischen Tensiden der allgemeinen Formel R³-CH₂-N[-(AO)_{z}H]₂, wobei
         ▪ es sich bei R³ um einen linearen Alkylrest oder Alkenylrest mit 8 bis 20 Kohlenstoffatomen handelt,
         ▪ AO unabhängig voneinander für C₂- bis C₄-Alkylenoxideinheiten stehen, mit der Maßgabe, dass es sich bei mindestens 80 mol % der AO-Einheiten um Ethylenoxideinheiten (EO) handelt, und
         ▪ z für eine Zahl von 3 bis 10 steht,
   (C) mindestens ein nichtionisches Tensid der allgemeinen Formel R⁴-(AO)ₘH, wobei
      ▪ es sich bei R⁴ um einen linearen Alkylrest mit 8 bis 20 Kohlenstoffatomen handelt,
      ▪ AO unabhängig voneinander für C₂- bis C₄-Alkylenoxideinheiten stehen, mit der Maßgabe, dass es sich bei mindestens 80 mol % der AO-Einheiten um Ethylenoxideinheiten (EO) handelt, und
      ▪ m für eine Zahl von mehr als 20 bis 70 steht,
   und wobei die Menge der Tenside (A) 5 bis 15 Gew.-%, die der Tenside (B) 5 bis 15 Gew.-% und die der Tenside (C) 2 bis 5 Gew.-%, jeweils bezogen auf die Paraffininhibitor-Komponente beträgt.

Weiterhin wurde ein Verfahren zur Herstellung derartiger Zusammensetzungen gefunden, bei dem man eine Schmelze der gewünschten Paraffininhibitor-Komponente unter Zugabe der Tenside (A), (B) und (C) bei einer Temperatur oberhalb der Schmelztemperatur der Paraffininhibitor-Komponente unter Verwendung eines geeigneten Dispergieraggregats in der wässrigen Phase dispergiert, und man die Mischung anschließend auf eine Temperatur unterhalb der Schmelztemperatur der Paraffininhibitor-Komponente abkühlen lässt.

Schließlich wurde die Verwendung derartiger Zusammensetzungen als Pour-Point-Depressant und Wachs-Inhibitor gefunden.

Zu der Erfindung ist im Einzelnen das Folgende auszuführen:
Bei der erfindungsgemäßen, wässrigen Zusammensetzung sind Partikel einer Paraffininhibitor-Komponente, insbesondere mit einem Schmelzpunkt von 30° C bis 90° C in einer kontinuierlichen wässrigen Phase mindestens umfassend Wasser sowie ein mit Wasser mischbares organisches Lösemittel verteilt, wobei die Zusammensetzung durch Tenside stabilisiert wird.

### Wässrige Phase

Die wässrige Phase umfasst Wasser sowie mit Wasser mischbares organisches Lösemittel. Erfindungsgemäß weist die wässrige Phase einen Schmelzpunkt von nicht mehr als -20° C, bevorzugt nicht mehr als -25° C, besonders bevorzugt nicht mehr als -30° C auf. Der Schmelzpunkt kann beispielsweise im Bereich von -60° C bis - 20° C, insbesondere - 50° C bis -25° C liegen.

Beispiele mit Wasser mischbarer organischer Lösemittel umfassen insbesondere Alkohole wie Methanol, Ethanol, n-Propanol, i-Propanol, Ethylenglykol, Diethylenglykol, 1,2-Propylenglykol, 1,3-Propylenglykol Ethylengklykolmonomethylether oder Propylenglykolmonomethylether. Beispiele bevorzugter organischer Lösemittel umfassen Ethylenglykol, Diethylenglykol, 1,2-Propylenglykol, 1,3-Propylenglykol Ethylenglykolmonomethylether oder Propylenglykolmonomethylether.

Die jeweilige Menge von Wasser und organischem Lösemittel werden vom Fachmann je nach dem gewünschten Schmelzpunkt der Mischung bestimmt. Geeignete Mischungsverhälnisse kann man einschlägigen Tabellenwerken entnehmen oder mit wenigen Versuchen selbst ermitteln. Die Menge an organischen Lösemitteln beträgt in der Regel mindestens 20 Gew.-%, beispielsweise 20 Gew.-% bis 80 Gew.-%, insbesondere 30 Gew.-% bis 70 Gew.-%, bezogen auf die Gesamtmenge aller Lösemittel in der wässrigen Phase.

In einer Ausführungsform der Erfindung wird eine wässrige Phase umfassend Wasser und 1,2-Propylenglykol und/oder Ethylenglykol eingesetzt, wobei der Anteil an 1,2-Propylenglykol und/oder Ethylenglykol 40 bis 60 Gew.-% beträgt, und es sich bei dem Rest der wässrigen Phase um Wasser handelt.

### Paraffininhibitor-Komponente

Erfindungsgemäß umfasst die wässrige Zusammensetzung weiterhin Partikel mindestens einer Paraffininhibitor-Komponente mit einem Schmelzpunkt von 30° C bis 95° C, bevorzugt 40° C bis 80° C und beispielsweise 45° C bis 65° , welche in der wässrigen Phase verteilt sind.

Bei der Paraffininhibitor-Komponente handelt es sich um eine Mischung umfassend mindestens einen polymeren Paraffininhibitor (X) sowie ein organisches, mit Wasser nicht mischbares Lösemittel. Selbstverständlich kann es sich auch um Partikel enthaltend verschiedene polymere Paraffininhibitoren (X) handeln und/oder um Gemische verschiedener Partikel, welche jeweils verschiedene polymere Paraffininhibitoren (X) enthalten.

Bei den Partikeln handelt es sich um kugelförmige oder annähernd kugelförmige Partikel. Die durchschnittliche Partikelgröße kann beispielsweise 1 bis 10 µm betragen, insbesondere 1 bis 6 µm, beispielsweise 2 bis 4 µm. Bei kugelförmigen Partikeln bezieht sich diese Angabe naturgemäß auf den Durchmesser, bei nicht kugelförmigen Partikeln bezieht sich diese Größe auf die längste Halbachse.

Der Begriff "Paraffininhibitor" im Sinne der vorliegenden Erfindung bezeichnet Stoffe mit der Eigenschaft das Ausscheiden von Paraffinen aus Rohöl zu verhindern oder zumindest zu vermindern und/oder den Pour-Point (Stockpunkt) von Rohölen zu verringern.

Ohne auf eine bestimmte Theorie festgelegt werden zu wollen, kann dieses Verhalten damit erklärt werden, dass Paraffine beim Abkühlen von Rohöl beim Unterschreiten einer bestimmten Temperatur kristallisieren, üblicherweise in Form von Plättchen. Die plättchenförmigen n-Paraffin-kristalle können eine Art Kartenhausstruktur bilden, welche das Rohöl einschließt, so dass das Rohöl stockt, obwohl der überwiegende Teil noch flüssig ist. Paraffin-Inhibitoren verhindern einerseits die Ausbildung dieser kartenhausähnlichen Strukturen und senken somit die Temperatur, bei der das Rohöl erstarrt. Weiterhin können Paraffininhibitoren die Ausbildung sehr feiner, gut kristallisierter, nicht-agglomerierender Paraffinkristalle fördern, so dass ein störungsfreier Öltransport sichergestellt ist.

Paraffininhibitoren sind naturgemäß lipophil und dementsprechend wasserunlöslich oder zumindest kaum wasserlöslich.

### Paraffininhibitoren (X)

Bei dem polymeren Paraffininhibitor (X) handelt es sich um ein Copolymer umfassend als Monomere
- α-Olefine mit 14 bis 32, bevorzugt 16 bis 26 Kohlenstoffatomen, sowie
- monoethylenisch ungesättigte Monomere umfassend Carboxylatgruppen, wobei die Carboxylatgruppen ganz oder teilweise mit aliphatischen, cycloaliphatischen und/oder aromatischen Alkoholen verestert sind, mit der Maßgabe, dass es sich bei mindestens 50 mol % der Alkohole um lineare aliphatische Alkohole mit 16 bis 32, bevorzugt 16 bis 26 Kohlenstoffatomen handelt.

Bei den Monomeren mit Carboxylatgruppen kann es sich beispielsweise um Acrylsäure, Meth-acrylsäure, Maleinsäure, Fumarsäure oder Itaconsäure bzw. deren Salze handeln. Bevorzugt handelt es sich um Maleinsäure.

Derartige Copolymere umfassend Maleinsäureeinheiten sind erhältlich durch Umsetzung von Copolymeren aus α-Olefinen und Maleinsäureanhydrid und nachfolgender, polymeranaloger Umsetzung der Maleinsäureanhydrid-Einheiten mit Alkoholen. Bevorzugt setzt man hierbei nicht mehr als 1 Äquivalent Alkohol pro Maleinsäureanhydrid-Einheit ein, so dass es sich bei den Estern im Wesentlichen im Maleinsäuremonoalkylester handelt. Geeignete Copolymere aus α-Olefinen und Maleinsäureanhydrid umfassen insbesondere 40 bis 60 mol-%, bevorzugt 45 mol-% bis 55 mol % α-Olefine sowie 60 mol-% bis 40 mol-%, bevorzugt 55 mol-% bis 45 mol-% Maleinsäureanhydrid.

In einer bevorzugten Ausführungsform der Erfindung handelt es sich bei dem polymeren Paraffininhibitor (X) um ein Copolymer umfassend als Monomere
- 40 bis 60 mol-% α-Olefine mit 14 bis 32, bevorzugt 16 bis 26 Kohlenstoffatomen, sowie
- 60 bis 40 mol-% Maleinsäure bzw. Salze davon, wobei die Carboxylatgruppen ganz oder teilweise mit aliphatischen, cycloaliphatischen und/oder aromatischen Alkoholen verestert sind, mit der Maßgabe, dass es sich bei mindestens 50 mol % der Alkohole um lineare aliphatische Alkohole mit 16 bis 32 Kohlenstoffatomen handelt.

Bevorzugt sind 30 bis 60 %, insbesondere 40 bis 50 % der Carboxylatgruppen verestert, d.h. bei den auf Maleinsäure basierenden Einheiten handelt es sich im Wesentlichen um Maleinsäuremonoalkylester. Daneben können eine geringe Menge an Maleinsäuredialkylestern, nicht umgesetzten Maleinsäureanhydrid-Einheiten sowie ggf. Maleinsäure bzw. deren Salze vorhanden sein.

Bei den linearen aliphatischen Alkoholen mit 16 bis 32 Kohlenstoffatomen, bevorzugt 16 bis 26 Kohlenstoffatomen kann es sich selbstverständlich um Mischungen verschiedener Alkohole handeln. Hierbei kann es sich insbesondere um Mischungen natürlich vorkommender Fettalkohole bzw. Wachsalkohole handeln. Fett- bzw. Wachsalkohole aus natürlichen Quellen weisen üblicherweise eine gerade Anzahl von Kohlenstoffatomen auf. In einer Ausführungsform der Erfindung wird eine Mischung aus mindestens drei Alkoholen eingesetzt, welche mindestens 1-Docosylalkohol, 1-Tetracosylalkohol und 1-Hexacosylalkohol umfasst.

In einer Ausführungsform handelt es sich bei den zur Veresterung eingesetzten Alkoholen ausschließlich um lineare aliphatische Alkohole mit 16 bis 32, bevorzugt 16 bis 26 Kohlenstoffatomen.

In einer weiteren Ausführungsform der der Erfindung setzt man zur Veresterung ein Gemisch umfassend 50 bis 90 mol-% linearer aliphatischer Alkohole mit 16 bis 32 Kohlenstoffatomen sowie 10 mol-% bis 50 mol-% davon verschiedener linearer, verzweigter oder cyclischer aliphatischer Alkohole oder aromatischer Alkohole ein. Bei derartigen zusätzlichen Alkoholen kann es sich insbesondere um lineare aliphatische Alkohole mit 4 bis 10 Kohlenstoffatomen, verzweigte und/oder sekundäre aliphatische Alkohole mit 4 bis 32 Kohlenstoffatomen, unsubstituierte oder alkylsubstituierte, cyclische aliphatische Alkohole mit 5 bis 18 Kohlenstoffatomen oder um unsubstituierte oder alkylsubstituierte aromatische Alkohole mit 6 bis 36 Kohlenstoffatomen handeln.

Das gewichtsmittlere Molekulargewicht M_{w} der bevorzugten Paraffininhibitoren beträgt in der Regel 2000 g/mol bis 25000 g/mol.

### Paraffininhibitor-Komponenten umfassend organische Lösemittel

Die polymeren Paraffininhibitoren (X) werden im Gemisch mit organischen, mit Wasser nicht mischbaren Lösemitteln eingesetzt.

Diese Vorgehensweise hat mehrere Vorteile: Einerseits können die polymere Paraffininhibitoren vorteilhaft in derartigen Lösemitteln hergestellt, und es ist vorteilhaft, die Lösemittel nicht entfernen zu müssen. Auch das Auflösen der Paraffininhibitor-Komponente im Rohöl ist erleichtert, wenn der polymere Paraffininhibitor (X) bereits im Gemisch mit einem organischen Lösemittel vorliegt. Schließlich kann der gewünschte Schmelzpunkt der Paraffininhibitor-Komponente auf einfache Art und Weise durch die Art des organischen Lösemittels sowie das Mischungsverhältnis von organischem Lösemittel und polymerem Paraffininhibitor (X) eingestellt werden. Selbstverständlich können auch Gemische verschiedener organischer Lösemittel eingesetzt werden.

Beispiele bevorzugter organischer Lösemittel umfassen Kohlenwasserstoffe bzw. Kohlenwasserstoffgemische, insbesondere solche mit einem Siedepunkt von mehr als 120° C, bevorzugt mehr als 150° C. Bevorzugt können organische Lösemittel mit einem Flammpunkt ≥ 60° C eingesetzt werden.

Es kann sich dabei um aliphatische, cycloaliphatische und/oder aromatische Kohlenwasserstoffe bzw. Kohlenwasserstoffgemische handeln.

In einer Ausführungsform handelt es sich um gesättigte aliphatische Lösemittel bzw. Lösemittelgemische. Es kann sich sowohl um paraffinische als auch um naphthenische, also gesättigte cylische Kohlenwasserstoffe handeln. Bevorzugt handelt es sich um hochsiedende aliphatische Kohlenwasserstoffe mit einem Siedepunkt von mindestens 175° C und bevorzugt einem Flammpunkt ≥ 60° C. insbesondere können technische Gemische von Kohlenwasserstoffen eingesetzt werden, beispielsweise Gemische paraffinischer Kohlenwasserstoffe, Gemische paraffinischer und naphtenischer Kohlenwasserstoffe oder Gemische von Isoparaffinen. Für den Fachmann ist klar, dass technische Gemische noch geringe Reste an aromatischen oder ungesättigten Kohlenwasserstoffen enthalten können. Der Gehalt an aromatischen und/oder ungesättigten Kohlenwasserstoffen sollte aber in der Regel < 1 Gew.-%, bevorzugt < 0,5 Gew.-% und besonders bevorzugt < 0,1 Gew.-% betragen. Technische Gemische gesättigter aliphatischer Lösemittel sind kommerziell erhältlich, beispielsweise technische Gemische der Shellsol® D-Reihe oder der Exxsol® D-Reihe.

In einer weiteren Ausführungsform kann es sich um aromatische Lösemittel bzw. Lösemittelgemische handeln. Bevorzugt handelt es sich um hochsiedende aromatische Kohlenwasserstoffe mit einem Siedepunkt von mindestens 175° C und bevorzugt einem Flammpunkt ≥ 60° C. Insbesondere können technische Gemische von aromatischen Kohlenwasserstoffen eingesetzt werden. Technische Gemische aromatischer Lösemittel sind kommerziell erhältlich, beispielsweise technische Gemische der Shellsol® A-Reihe oder der Solvesso® - Reihe.

Die Paraffininhibitor Komponenten können neben den polymeren Paraffininhibitoren (X) sowie optional organischen, mit Wasser nicht mischbaren Lösemitteln selbstverständlich noch weitere Bestandteile umfassen.

Das Mischungsverhältnis von Paraffininhibitor-Komponente (X) und organischem Lösemittel kann vom Fachmann je nach den gewünschten Eigenschaften, insbesondere je nach dem gewünschten Schmelzpunkt eingestellt werden. In der Regel beträgt aber der Anteil der polymeren Paraffininhibitoren (X) mindestens 50 Gew.-% bezüglich der Summe aller Komponenten der Paraffininhibitor-Komponente, insbesondere 50 Gew.-% bis 90 Gew.-%. Bevorzugte Paraffininhibitor-Komponenten umfassen 60 Gew.-% bis 90 Gew.-% an polymeren Paraffininhibitoren (X) sowie 10 Gew.-% bis 40 Gew.-% organischer Lösemittel.

Erfindungsgemäß beträgt die Menge der Paraffininhibitor-Komponente (X) 20 bis 40 Gew.-% bezogen auf die Summe aller Komponenten der wässrigen Zusammensetzung, bevorzugt 25 bis 35 Gew.-%.

### Tenside

Erfindungsgemäß umfasst die wässrige Zusammensetzung mindestens 3 voneinander verschiedene Tenside (A), (B) und (C). Die Tenside stabilisieren die wässrige Zusammensetzung.

Bei den Tensiden (A) und (B) handelt es sich bevorzugt um Tenside mit einem aliphatischen Kohlenwasserstoffrest mit 8 bis 20 Kohlenstoffatomen, wobei die Tenside (A) einen linearen aliphatischen Kohlenwasserstoffrest und die Tenside (B) einen verzweigten aliphatischen Kohlenwasserstoffrest aufweisen. Es kann sich um nichtionische oder ionische, bevorzugt um nichtionische Tenside handeln.

Bei dem Tensid (C) handelt es sich bevorzugt um ein polymeres Tensid, bevorzugt ein nichtionisches polymeres Tensid mit einem zahlenmittleren Molekulargewicht Mₙ von mindestens 750 g/mol, beispielsweise 750 bis 7500 g/mol, insbesondere 750 bis 4000 g/mol.

### Tenside (A)

Bei den Tensiden (A) handelt es sich um mindestens ein nichtionisches Tensid der allgemeinen Formel (I) R¹-(AO)ₓH.

Bei R¹ handelt es sich um einen linearen Alkylrest mit 8 bis 20 Kohlenstoffatomen, bevorzugt 12 bis 20 Kohlenstoffatomen und beispielsweise 14 bis 18 Kohlenstoffatomen. Es kann sich beispielsweise um C₁₆- und C₁₈-Alklyreste handeln.

Bei den Gruppen AO handelt es sich unabhängig voneinander um C₂- bis C₄-Alkylenoxideinheiten, beispielsweise 1,2-Ethylenoxy-CH₂CH₂O-, 1,2-Propylennoxy-CH₂CH(CH₃)O- und 1,2-Butylenoxygruppen -CH₂CH(C₂H₅)O-, mit der Maßgabe, dass es sich bei mindestens 80 mol-%, bevorzugt mindestens 90 mol-% der AO-Einheiten um Ethylenoxyeinheiten (EO) handelt. In einer bevorzugten Ausführungsform handelt es sich ausschließlich um Ethylenoxyeinheiten (EO).

In Formel (I) steht x für eine Zahl von 5 bis 20, bevorzugt 8 bis 15. Für den Fachmann auf dem Gebiet der Alkoxylierungen ist klar, dass es sich hierbei um Durchschnittswerte handelt.

Bevorzugt handelt es sich bei Tensid (A) um mindestens ein nichtionisches Tensid der allgemeinen Formel R¹-(EO)ₓH, wobei es sich bei R¹ um einen linearen Alkylrest mit 12 bis 20 Kohlenstoffatomen handelt und x für eine Zahl von 8 bis 15 steht.

### Tenside (B)

Bei den Tensiden (B) handelt es sich um mindestens ein Tensid ausgewählt aus der Gruppe der Tenside (B1) und (B2).

### Tenside (B1)

Bei (B1) handelt es sich um nichtionische Tenside der allgemeinen Formel (II) R²-(AO)_{y}H.

Bei R² handelt es sich um einen verzweigten Alkylrest mit 8 bis 20 Kohlenstoffatomen, bevorzugt 11 bis 17 Kohlenstoffatomen.

Die Gruppen AO haben die oben definierte Bedeutung, mit der Maßgabe, dass es sich bei mindestens 80 mol %, bevorzugt mindestens 90 mol-% der AO-Einheiten um Ethylenoxyeinheiten (EO) handelt. In einer bevorzugten Ausführungsform handelt es sich ausschließlich um Ethylenoxyeinheiten (EO).

In Formel (II) steht y für eine Zahl von 5 bis 20, bevorzugt 5 bis 15. Für den Fachmann auf dem Gebiet der Alkoxylierungen ist klar, dass es sich hierbei um Durchschnittswerte handelt.

Bevorzugt handelt es sich bei Tensid (B1) um mindestens ein nichtionisches Tensid der allgemeinen Formel R²-(EO)_{y}H, wobei es sich bei R² um einen verzweigten Alkylrest mit 11 bis 17 Kohlenstoffatomen handelt, und y für eine Zahl von 5 bis 15 steht.

### Tenside (B2)

Bei (B2) handelt es sich um nichtionische Tenside (B2) der allgemeinen Formel (III) R³-CH₂-N[-(AO)_{z}H]₂.

Bei R³ handelt es sich um einen linearen Alkylrest oder linearen Alkenylrest mit 8 bis 20 Kohlenstoffatomen, bevorzugt 12 bis 20 Kohlenstoffatomen. Bevorzugt handelt es sich um einen Al-kenylrest.

Die Gruppen AO haben die oben definierte Bedeutung, mit der Maßgabe, dass es sich bei mindestens 80 mol %, bevorzugt mindestens 90 mol-% der AO-Einheiten um Ethylenoxyeinheiten (EO) handelt. In einer bevorzugten Ausführungsform handelt es sich ausschließlich um Ethylenoxyeinheiten (EO).

In Formel (III) steht z für eine Zahl von 3 bis 10, bevorzugt 4 bis 8. Für den Fachmann auf dem Gebiet der Alkoxylierungen ist klar, dass es sich hierbei um Durchschnittswerte handelt.

Bevorzugt handelt es sich bei Tensid (B2) um mindestens ein nichtionisches Tensid der allgemeinen Formel R³-CH₂-N[-(EO)_{z}H]₂, wobei es sich bei R³ um einen linearen Alkenylrest mit 12 bis 20 Kohlenstoffatomen handelt, und z für eine Zahl von 4 bis 8 steht.

### Tenside (C)

Bei den Tensiden (C) handelt es sich um mindestens ein nichtionisches Tensid der allgemeinen Formel (IV) R⁴-(AO)ₘH.

Bei R⁴ handelt es sich um einen linearen Alkylrest mit 8 bis 20 Kohlenstoffatomen, bevorzugt 12 bis 20 Kohlenstoffatomen und beispielsweise 14 bis 18 Kohlenstoffatomen. Es kann sich beispielsweise um C₁₆- und C₁₈-Alklyreste handeln.

Die Gruppen AO haben die oben definierte Bedeutung, mit der Maßgabe, dass es sich bei mindestens 80 mol %, bevorzugt mindestens 90 mol-% der AO-Einheiten um Ethylenoxyeinheiten (EO) handelt. In einer bevorzugten Ausführungsform handelt es sich ausschließlich um Ethylenoxyeinheiten (EO).

In Formel (IV) steht m für eine Zahl von 20 bis 70, bevorzugt 40 bis 60. Für den Fachmann auf dem Gebiet der Alkoxylierungen ist klar, dass es sich hierbei um Durchschnittswerte handelt.

Bevorzugt handelt es sich bei Tensid (C) um mindestens ein nichtionisches Tensid der allgemeinen Formel R⁴-(EO)ₘH, wobei es sich bei R⁴ um einen linearen Alkylrest mit 12 bis 20 Kohlenstoffatomen handelt, und m für eine Zahl von 40 bis 60 steht.

### Menge der Tenside

Die Menge der Menge der Tenside (A) beträgt 5 bis 15 Gew.-%, die der Tenside (B) 5 bis 15 Gew.-% und die der Tenside (C) 2 bis 5 Gew.-%, jeweils bezogen auf die Paraffininhibitor-Komponente. Bevorzugt wird die Menge der Tenside dabei so bemessen, dass die Gesamtmenge der Tenside 15 bis 25 Gew.-% beträgt.

### Bevorzugte wässrige Zusammensetzung

In einer Ausführungsform der Erfindung handelt es sich um die folgende wässrige Zusammensetzung:

| | |
|---|---|
| Paraffininhibitor-Komponente | 10 bis 40 Gew.-% |
| (X) | |
| Tensid (A) | 1 bis 3 Gew.-% |
| Tensid (B) | 1 bis 3 Gew.-% |
| Tensid (C) | 0,1 bis 2 Gew.-% |
| KOH (85%-ig) | 0 bis 1 Gew.-% |
| Wasser | 15 bis 40 Gew.-% |
| Propylenglykol | 25 bis 50 Gew.-% |

### Verfahren zur Herstellung der wässrigen Zusammensetzungen

Die erfindungsgemäßen Zusammensetzungen können hergestellt werden, indem man die gewünschte(n) Paraffininhibitor-Komponente(n) aufschmilzt, unter Zugabe der Tenside (A), (B) und (C) bei einer Temperatur oberhalb der Schmelztemperatur der Paraffininhibitor-Komponente in der wässrigen Phase verteilt und die Mischung anschließend wieder auf Raumtemperatur abkühlen lässt. Beim Abkühlen erstarrt die Paraffininhibitor-Komponente wieder, und es verbleiben feste Partikel der Paraffininhibitor-Komponente, welche in der wässrigen Phase dispergiert sind.

Zum Verteilen der geschmolzenen Paraffininhibitor-Komponente in der wässrigen Phase können prinzipiell bekannte Rühr- und/oder Dispergieraggregate verwendet werden, beispielsweise Rührer, Propellerrührer, Kolloidmühlen, Ultraturrax-Geräte, Ultraschallgeneratoren, Homogenisatoren oder Kombinationen davon.

Die Funktionsweise von Ultraturrax-Geräten basiert auf dem Rotor-Stator-Prinzip. Dabei wird der Rotor mit einer hohen Umfangsgeschwindigkeit bewegt. Diese Rotation bewirkt einen Sog, der das Medium in den Rotor saugt und durch die Zähne des Stators nach außen presst. Dabei wird die Probe dispergiert.

Homogenisatoren dienen in erster Linie zur Verringerung und Vereinheitlichung der Teilchengröße einer bereits bestehenden Emulsion. Hierzu wird eine grobteilige Emulsion unter Druck durch den Spalt eines Homogenisierventils oder mehreren davon gedrückt. Der Spalt zwischen Ventilsitz und Ventilkörper ist einstellbar und beträgt in der Regel nur wenige Mikrometer. Das Fluid strömt radial durch den Spalt, wobei die Strömungsgeschwindigkeit erheblich steigt. Nach dem Verlassen des Spalts prallt das Fluid in der Regel auf einen Prallring. Der Druck wird in der Regel durch eine Kolbenpumpe, insbesondere durch eine Kolbenpumpe mit mehreren Kolben, beispielsweise mit 3 Kolben erzeugt.

Zur Ausführung des Verfahrens sind prinzipiell verschiedene Vorgehensweisen denkbar. Man kann beispielsweise die Paraffininhibitor-Komponente und die Tenside erhitzen und zu der erhitzten Mischung die wässrige Phase zugeben. Ein Teil der wässrigen Phase kann auch bereits vor dem Erhitzen zugegeben werden. Man kann auch erst die wässrige Phase erhitzen und dann die Paraffininhibitor-Komponente zugeben.

Die Temperatur, auf die mindestens erhitzt werden muss, richtet sich zwangsläufig nach dem Schmelzpunkt der Paraffininhibitor-Komponente. Die Temperatur muss mindestens den Schmelzpunkt der Paraffin-Inhibitor-Komponente erreichen. Zweckmäßigerweise ist die Temperatur, auf die erhitzt wird, mindestens 5° C höher, bevorzugt mindestens 10° C höher als die Schmelztemperatur der Paraffininhibitor-Komponente. Verwendet man bevorzugte Paraffininhibitor-Komponenten mit einem Schmelzpunkt von 45° C bis 65° C, so hat sich eine Temperatur von 70° C bis 90° C bewährt.

In einer Ausführungsform der Erfindung erfolgt die Herstellung der wässrigen Zusammensetzung mittels eines mehrstufigen Verfahrens. Hierbei werden in einer ersten Stufe eine festen Paraffininhibitor-Komponente die Tenside (A), (B) und (C) und mindestens ein Teil der wässrigen Phase bei einer Temperatur unterhalb der Schmelztemperatur der Paraffininhibitor-Komponente miteinander vermischt und hiernach unter fortgesetztem Vermischen auf eine Temperatur oberhalb der Schmelztemperatur erwärmt. Hierbei bilden sich Tröpfchen der Paraffininhibitor Komponente in der wässrigen Phase. Das Vermischen in der ersten Stufe kann insbesondere mittels Rühren, beispielsweise durch Rühren mit einem Propellerrührer erfolgen.

Anschließend wird die Mischung unter Verwendung eines geeigneten Dispergieraggregates homogenisiert. Die Dispergieraggregate zerteilen die aufgeschmolzenen Tröpfchen der Paraffininhibitor-Komponente, welche durch die Tenside stabilisiert werden. Hierzu können beispielsweise ein Ultraturrax-Gerät und/oder ein Homogenisator eingesetzt werden. In einer Ausführungsform der Erfindung wird für die zweite Stufe ein Homogenisator verwendet.

Anschließend lässt man die Mischung wie oben beschreiben wieder auf eine Temperatur unterhalb der Schmelztemperatur der Paraffininhibitor-Komponente abkühlen

### Verwendung der wässrigen Dispersion als Pour-Point-Depressant

Die erfindungsgemäßen wässrigen Dispersionen können als Pour-Point-Depressants verwendet werden, indem man die wässrige Dispersion dem Rohöl zusetzt.

Hierbei kann man die oben beschriebenen Zusammensetzungen als solche einsetzen. Selbstverständlich kann man die erfindungsgemäßen Zusammensetzungen vor Gebrauch aber auch noch verdünnen, beispielsweise mit Wasser und/oder mit Wasser mischbaren Lösemitteln wie beispielsweise Methanol. Dier Zusammensetzungen können auch noch mit anderen Komponenten formuliert werden.

Die dem Rohöl zugesetzte Menge der wässrigen Dispersion wird vom Fachmann so bemessen, dass die gewünschte Herabsetzung des Pour-Points erzielt wird, wobei er für den Fachmann selbstverständlich ist, dass die notwendige Menge von der Art des Rohöls abhängig ist. Andererseits ist es aus wirtschaftlichen Gründen erwünscht, möglichst wenig Pour-Point-Depressant einzusetzen.

Die Menge der wässrigen Dispersion wird dabei in der Regel so bemessen, dass die Menge des polymeren Paraffininhibitors (X) 50 bis 1500 ppm bzgl. des Rohöls beträgt. Bevorzugt beträgt die Menge 100 bis 1000 ppm, besonders bevorzugt 250 bis 600 ppm und beispielsweise 300 bis 600 ppm.

Hierbei ist es empfehlenswert, die wässrigen Dispersionen dem Rohöl zuzugeben, bevor sich die ersten Paraffin-Kristallite bilden. Die Temperatur, bei der sich allererste Paraffin-Kristallite bilden, wird auch WAT ("Wax appearance termperature") genannt. In einer Ausführungsform der Erfindung gibt man die wässrigen Dispersionen daher bei einer Temperatur oberhalb der WAT zu, bevorzugt bei mindestens 10° C oberhalb der WAT.

Der Ort der Zugabe der wässrigen Dispersion zum Rohöl wird vom Fachmann geeignet gewählt. Die Zugabe kann beispielsweise im in der Formation, im Bohrloch, am Bohrlochkopf oder in eine Pipeline erfolgen.

In einer Ausführungsform injiziert man die wässrige Dispersion in eine Rohölpipeline. Bevorzugt kann die Injektion auf dem Ölfeld erfolgen, d.h. am Beginn der Rohölpipeline, aber die Injektion kann selbstverständlich auch an einem anderen Ort erfolgen. Beispielsweise kann es sich um eine Pipeline handeln, welche von einer Offshore-Plattform ans Festland führt.

Durch die wässrige Dispersion kann man verhindern, dass sich Pipelines verstopfen, falls sich das Rohöl beim Transport in der Pipeline abkühlt. Diese Gefahr ist naturgemäß besonders ausgeprägt, wenn es sich um eine Pipeline in kalter Umgebung, z.B. in arktischer Umgebung handelt.

In einer weiteren Ausführungsform der Erfindung injiziert man die wässrige Dispersion in eine Produktionsbohrung. In einer Ausführungsform kann es sich um eine Offshore-Produktionsbohrung handeln. Die Injektion kann etwa an der Stelle erfolgen, an der Öl aus der Formation in die Produktionsbohrung einfließt. Auf diese Art und Weise kann man das Erstarren des Rohöls in der Produktionsbohrung und in nachgeschalteten Transportpipelines eine zu starke Erhöhung von dessen Viskosität sowie die Querschnittsverengung von Rohren durch Paraffinablagerungen verhindern.

In einer Ausführungsform der Erfindung kann die Injektion umbilikal erfolgen. Hierbei wird ein flexibler Stang, umfassend mindestens eine Rohrleitung sowie optional elektrische Leitungen oder Steuerleitungen in einer schützenden Hülle axial in ein Bohrloch oder eine Pipeline eingebracht. Durch Rohrleitung im flexiblen Strang kann die wässrige Dispersion genau an der gewünschten Stelle injiziert werden.

### Weitere Verwendungen der wässrigen Zusammensetzung

In einer weiteren Ausführungsform der Erfindung werden die oben beschriebenen wässrigen Dispersionen zur Vermeidung von Wachsablagerungen auf Oberflächen, welche in Kontakt mit Rohöl, Mineralöl und/oder Mineralölprodukten sind, verwendet. Bevorzugt handelt es sich um Oberflächen, welche im Kontakt mit Rohöl stehen.

Die Verwendung erfolgt, indem man dem Rohöl die besagte wässrige Dispersion zusetzt. Die Art des Einsatzes ist analog zu der Verwendung als Pour-Point-Depressant. Neben den erfindungsgemäßen wässrigen Dispersionen können selbstverständlich noch weitere Paraffin-Inhibitoren eingesetzt werden.

### Vorteile der Erfindung

Die vorliegende Erfindung bezieht sich auf wässrige Dispersionen von Paraffininhibitor-Komponenten, welche selbst bei hohen Konzentration von Paraffininhibitor-Komponenten auch bei Temperaturen deutlich unter dem Gefrierpunkt noch flüssig sind.

Diese Dispersionen lassen sich einfach weiter verarbeiten, ohne dass es aufwändiger Arbeitsschritte (wie beispielsweise aufschmelzen und lösen fester Verbindungen) bedürfte. Das Arbeiten mit brennbaren Lösemitteln wird vermieden.

Die nachfolgenden Beispiele sollen die Erfindung näher illustrieren.

### Synthese der Paraffininhibitoren

### Herstellung von unmodifizierten Olefin-MSA-Copolymeren

### Copolymer I

### C_{20/24}-Olefine + MSA, 1:1 molar, ohne Lösemittel

Für die Polymerisation wird ein Vierhalskolben mit Rührer, Innenthermometer, Stickstoffzuleitung und Rückflusskühler sowie Zuläufen für Maleinsäureanhydrid und Initiator eingesetzt.

Im beheizbaren Tropftrichter 1 mol Maleinsäureanhydrid bei 80 ° C aufschmelzen. Unter N₂-Begasung Vorlage mit 1 mol einer handelsüblichen Mischung von *α* -Olefinen (Hauptbestandteile C₂₀-, C₂₂- und C₂₄-Olefine) auf eine Innentemperatur von 150 ° C aufheizen, dann Maleinsäureanhydrid und 1 mol% (bzgl. Monomere) Di-tert-Butylperoxid über 5 h aus getrennten Zuläufen zudosieren. Danach 1 h bei einer Innentemperatur von 150 ° C nachpolymerisieren. Es wird ein Olefin-MSA-Copolymer mit einem zahlenmittleren Molekulargewicht Mₙ von 10000 g/mol erhalten.

### Copolymer II

### C_{20/24}-Olefine + MSA, 1:1,14 molar, in aliphatischem Lösemitteln

Für die Polymerisation wird ein Vierhalskolben mit Rührer, Innenthermometer, Stickstoffzuleitung und Rückflusskühler sowie Zuläufen für Maleinsäureanhydrid und Initiator eingesetzt.

Im beheizbaren Tropftrichter 1,1 mol Maleinsäureanhydrid bei 80 ° C aufschmelzen. Unter N₂-Begasung Vorlage mit Solvesso® 150 befüllen. 1 mol einer handelsüblichen Mischung von *α* -Olefinen (Hauptbestandteile C₂₀-, C₂₂- und C₂₄-Olefine) auf eine Innentemperatur von 150 ° C aufheizen, dann Maleinsäureanhydrid und 1 mol% (bzgl. Monomere) Di-tert-Butylperoxid über 5 h aus getrennten Zuläufen zudosieren. Die Menge des Lösemittels wird so bemessen, dass eine Lösung von 50 Gew. % des Polymers entsteht. Nach beendeter Zugabe 1 h bei einer Innentemperatur von 150 ° C nachpolymerisieren. Es wird ein Olefin-MSA-Copolymer mit einem zahlenmittleren Molekulargewicht Mₙ von 4000 g/mol erhalten.

### Paraffininhibitor I

### Copolymer I, Ringöffnung mit C_{16/22}-Alkoholen

Für die Synthese wird ein Vierhalskolben mit Rührer, Innenthermometer, Stickstoffzuleitung und Rückflusskühler sowie einem Zulauf für Solvesso® 150 (Gemisch aus hochsiedenden Aromaten, Flammpunkt 66° C) eingesetzt.

15 g Copolymer I und 13,8 g einer kommerziell erhältlichen Mischung linearer Alkohole (Hauptbestandteile C₁₆- bis C₂₂-Alkohole) werden bei einer Außentemperatur von 85° C geschmolzen und nach dem Schmelzen wird 7,2 g Solvesso® 150 zugegeben. Auf 150 ° C Außentemperatur aufheizen und 4 h rühren.

Erhalten wird eine Mischung aus 80 Gew.-% Copolymer und 20 Gew.-% Solvesso® 150 mit einem Schmelzpunkt von ca. 50° C.

### Paraffininhibitor II

### Copolymer I, Ringöffnung mit C_{22/26}-Alkoholen

Für die Synthese wird ein Vierhalskolben mit Rührer, Innenthermometer, Stickstoffzuleitung und Rückflusskühler sowie einem Zulauf für Solvesso® 150 (Gemisch aus hochsiedenden Aromaten, Flammpunkt 66° C) eingesetzt.

15 g Copolymer I und 18,5 g einer kommerziell erhältlichen Mischung linearer Alkohole (Hauptbestandteile C₂₂- bis C₂₆-Alkohole) werden bei einer Außentemperatur von 85° C geschmolzen und nach dem Schmelzen werden 8,4 g Solvesso® 150 zugegeben. Auf 150 ° C Außentemperatur aufheizen und 4 h rühren.

Erhalten wird eine Mischung aus 80 Gew.-% Copolymer und 20 Gew.-% Solvesso® 150 mit einem Schmelzpunkt von ca. 50° C.

### Paraffininhibitor III

### Copolymer II, Ringöffnung mit C_{16/22}-Alkoholen

Für die Synthese wird ein Vierhalskolben mit Rührer, Innenthermometer, Stickstoffzuleitung und Rückflusskühler sowie einem Zulauf für Solvesso® 150 (Gemisch aus hochsiedenden Aromaten, Flammpunkt 66° C) eingesetzt.

19,7 g einer 50 %-igen Lösung des Copolymers II in Solvesso® 150 und 10,4 g einer kommerziell erhältlichen Mischung linearer Alkohole (Hauptbestandteile C₁₆- bis C₂₂-Alkohole) werden bei einer Außentemperatur von 85° C geschmolzen. Auf 150 ° C Außentemperatur aufheizen und 6 h rühren.

Erhalten wird eine Mischung aus 70 Gew.-% Copolymer und 30 Gew.-% Solvesso® 150 mit einem Schmelzpunkt von ca. 45° C.

### Parafininhibitor IV

### Copolymer II, Ringöffnung mit C_{22/26}-Alkoholen

Für die Synthese wird ein Vierhalskolben mit Rührer, Innenthermometer, Stickstoffzuleitung und Rückflusskühler sowie einem Zulauf für Solvesso® 150 (Gemisch aus hochsiedenden Aromaten, Flammpunkt 66° C) eingesetzt.

15,0 g einer 50 %-igen Lösung des Copolymers II in Solvesso® 150 und 9,5 g einer kommerziell erhältlichen Mischung linearer Alkohole (Hauptbestandteile C₂₂- bis C₂₆-Alkohole)werden bei einer Außentemperatur von 85° C geschmolzen. Auf 150 ° C Außentemperatur aufheizen und 6 h rühren.

Erhalten wird eine Mischung aus 70 Gew.-% Copolymer und 30 Gew.-% Solvesso® 150 mit einem Schmelzpunkt von ca. 45° C.

### Tenside

| Tensid | | Beschreibung |
|---|---|---|
| Nr. | Typ | |
| 1 | A | C_{16/18}(EO)₁₁H |
| | | linearer C_{16/18}-Alkohol, mit 11 EO ethoxyliert, HLB ca. 13 (Lutensol® AT 11) |
| 3 | B | *i*-C₁₃(EO)₇H |
| | | Iso-C₁₃-Oxoalkohol, mit 7 EO ethoxyliert, HLB ca. 12 (Lutensol® TO 7) |
| 4 | B | R-CH₂N[(CH₂CH₂O)₆H]₂ |
| | | R=Oleyl, HLB ca. 13 (Lutensol® FA 12) |
| 2 | C | C_{16/18}(EO)₅₀H |
| | | linearer C_{16/18}-Alkohol, mit 50 EO ethoxyliert, HLB ca. 18 (Lutensol® AT 50) |

### Wassermischbare organische Lösemittel

### Ethylenglykol

### Propylenglykol

### II Durchführung der Versuche

### Geräte

Rührwerk (Heidolph RZR 2102 control)
4-Flügel-Propellerrührer (0 60 mm)
Ultra-Turrax (IKA T 18 digital)
Dispergierwerkzeug (IKA S 18 N - 19 G)
Waage (Mettler Toledo XP 10002 S)
Emulgiertopf (Edelstahl, 1000 ml, H 185 mm, Ø 85-95 mm)
Becherglas (600 ml, hohe Form, mit Ausguss)
Stockthermometer (-20+250° C, Eintauchtiefe 100 mm)
Heizplatte (Rommelsbacher AK 2080.2)
Wasserkocher (Bosch WK 10)
pH-Meter (Knick 761 Calimatic)
Magnetrührer (Heidolph MR-Hei Tec)
Magnetrührstäbchen (L 40 mm, Ø 7 mm)
Laborflasche (500 ml)

### Allgemeine Versuchsvorschrift

Der Paraffininhibitor, die Tenside sowie ein Teil des Wassers und des wassermischbaren, organischen Lösemittels (Mengenangaben siehe Tabelle) wurden in den Emulgiertopf eingewogen und unter Rühren mit einem Stockthermometer auf 85° C erwärmt. Anschließend wurde die Paraffininhibitormischung mit einem Propellerrührer bei 2000 Upm weitergerührt, wobei die Temperatur auf 85° C gehalten wurde. Die verbliebene Menge Wasser und des wassermischbaren, organischen Lösemittels sowie KOH (Mengenangaben siehe Tabelle) wurden in einem separaten Becherglas auf 60° C vorgewärmt. Diese Lösung wurde anschließend innerhalb von 5 min bei fortgesetztem Rühren mit dem Propellerrührer zu der Emulsion des Paraffininhinitors zugetropft und weitere 5 min gerührt. Danach wurde 1 min mit einem auf 90° C vorgewärmten Ultraturrax (25000 Upm) homogenisiert. Anschließend wurde auf Raumtemperatur abgekühlt.

### Homogenisator

Es wurde ein Homogenisator des Typs Bran + Luebbe SHL-05 verwendet. Es handelt sich um eine Hockdruck-Homogenisiermaschine mit einer liegenden 3-Kolbenpumpe.

### Aussehen der erhaltenen Emulsionen bei 23° C

Das Aussehen der wässrigen Emulsionen bei 23° C wurde jeweils wie folgt bewertet.

| Bewertung | Erläuterung |
|---|---|
| 1 | Homogene, stabile Emulsion - keine Trennung oder Aufrahmen |
| 2 | Leichtes Aufrahmen, aber Probe nach Schütteln wieder homogen |
| 3 | Probe rahmt deutlich auf. Probe durch Schütteln nicht wieder homogen |
| 4 | Probe zeigt kleine Partikeln (Stippen). Probe nicht homogen |
| 5 | Instabile Emulsion. Probe zeigt deutliche Trennung |

### Test der Fließfähigkeit

Zum Test der Fließfähigkeit wird das aufrecht stehende Gefäß, in dem die wässrige Zusammensetzung gelagert wird (35ml Glasflaschen 30 x 80, Glasstärke von 1,2 mm, Gewinde GL 22) um 90° gekippt. Zusammensetzung ist fließfähig, wenn sie nach dem Kippen des Gefäßes aus dem Gefäß fließt, und sie ist fest, wenn sie nach dem Kippen des Gefäßes nicht aus dem Gefäß fließt. Ob die Zusammensetzung leicht fließt, viskos oder hochviskos ist, wird visuell beobachtet.

### Lagerung:

Zum Test der Langzeitstabilität bei tiefen Temperaturen wurden ca. 20 ml der Dispersion in die oben genannten Gläser gefüllt. Die Proben wurden bei verschiedene Temperaturen (+5° C, -10° C und -20° C) gelagert. Nach bestimmten Zeiträumen wurde -wie oben geschildert- geprüft, ob die Proben noch flossen oder nicht.

Die Ergebnisse der Tests sind in den nachfolgenden Tabellen 1 bis 7 dargestellt.

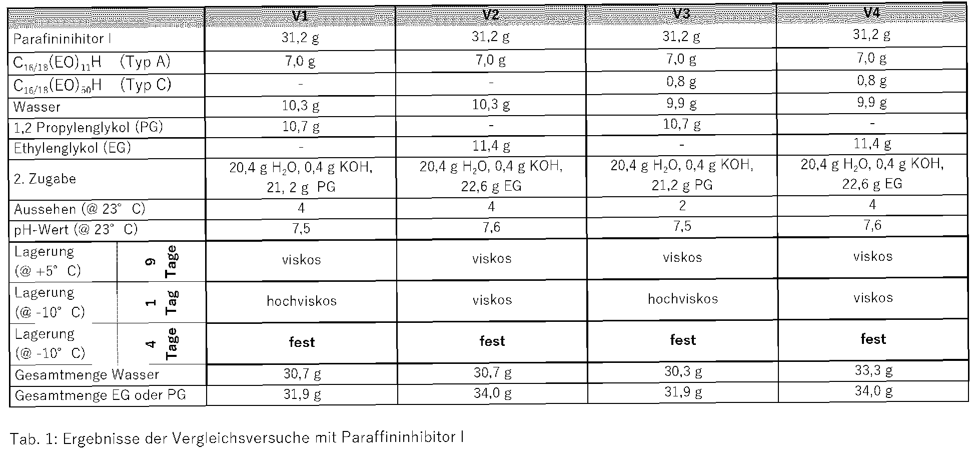

**Tab. 2: Ergebnisse der Vergleichsversuche mit Paraffininhibitor I**

| | | **V5** | **V6** | **V7** | **V8** |
|---|---|---|---|---|---|
| Paraffininhibitor I | | 31,2 g | 31,2 g | 31,2 g | 31,2 |
| C_{16/18}(EO)₁₁H | (Typ A) | 3,5 g | 6,0 g | 10,5 g | 14,0 g |
| C_{16/18}(EO)₅₀H | (Typ C) | 0,8 g | 0,8 g | 0,8 g | 0,8 g |
| Wasser | | 11,6 g | 10,4 g | 8,1 g | 3,2 g |
| 1,2 Propylenglykol | | 12,2 g | 10,8 g | 8,5 g | 3,3 g |
| 2. Zugabe | | 20,4 g H₂O, 0,4 g KOH, 21,4 g PG | 20,4 g H₂O, 0,4 g KOH, 22,6 g EG | 20,4 g H₂O, 0,4 g KOH, 21,2 g PG | 20,4 g H₂O, 0,4 g KOH, 22,6 g EG |
| Aussehen (@ 23° C) | | 3 | 1 | 1 | 1 |
| pH-Wert (@ 23° C) | | 7,7 | 7,6 | 7,3 | 7,2 |
| Lagerung (@ +5° C) | **30 Tage** | flüssig | flüssig | **fest** | **fest** |
| Lagerung (@-10° C) | **1 Tag** | flüssig | flüssig | - | - |
| Lagerung (@-10° C) | **21 Tage** | **hochviskos** | **fest** (n. 4 Tagen) | - | - |
| Gesamtmenge Wasser | | 32 g | 30,8 g | 28,5 g | 23,6 g |
| Gesamtmenge EG oder PG | | 33,6 g | 33,4 g | 29,7 g | 25,9 g |

**Tabelle 3: Ergebnisse von Beispielen und Vergleichsbeispielen mit Paraffininhibitor I**

| | | **V9** | **Beispiel 1** | **Beispiel 2** |
|---|---|---|---|---|
| Paraffininhibitor I | | 31,2 g | 31,2 g | 31,2 g |
| C_{16/18}(EO)₁₁H | (Typ A) | 2,0 g | 2,0 g | 2,0 g |
| *i*-C₁₃(EO)₇H | (Typ B) | - | 2,0 g | - |
| R-CH₂N[(CH₂CH₂O)_{n/2}H]₂ | (Typ B) | - | - | 2,0 g |
| C_{16/18}(EO)₅₀H | (Typ C) | 0,8 g | 0,8 g | 0,8 g |
| Wasser | | 12,4 g | 11,4 g | 11,4 g |
| 1,2 Propylenglykol | | 12,9 g | 11,8 g | 11,8 g |
| 2. Zugabe | | 20,4 g H₂O, 0,4 g KOH, 21,2 g PG | 20,4 g H₂O, 0,4 g KOH, 21,2 g PG | 20,4 g H₂O, 0,4 g KOH, 21,2 g PG |
| Aussehen (@ 23° C) | | 3 | 2 | 2 |
| pH-Wert (@ 23° C) | | 7,9 | 7,6 | 7,9 |
| Lageru ng (@ -10° C) | **1 Tag** | - | flüssig | flüssig |
| Lagerung (@ -10° C) | **30 Tage** | - | **flüssig** | **viskos** |
| Lageru ng (@ -20° C) | **19 Tage** | - | hochviskos | - |

**Tab. 4: Vergleich der Homogenisierung unter Verwendung eines Ultraturrax und eines Homogenisators**

| | | **Beispiele 3** | **Beispiel 4** |
|---|---|---|---|
| Versuchsdurchführung | | Beispiel 1 wurde im 500 ml Maßstab 9 x wiederholt. Die einzelnen Ansätze wurden gemischt und davon die folgenden Eigenschaften bestimmt: | 2000 ml des Produkts aus Beispiel 3 wurden wurde auf 55° C erwärmt, und die Dispersion wurde 2 x bei 250 bar durch einen handelsüblichen Homogenisator (SHL-05, Fa. Bran + Luebbe) laufen lassen. Anschließend wurden davon die folgenden Eigenschaften bestimmt: |
| Aussehen(@ 23° C) | | 2 | 2 |
| pH-Wert (@ 23° C) | | 7,5 | 7,4 |
| Lageru ng (@ -20° C) | **30 Tage** | hochviskos | viskos |

**Tabelle 5: Ergebnis mit Paraffininhibitor II**

| | | **Beispiel 5** |
|---|---|---|
| Paraffininhibitor II | | 31,3 |
| C_{16/18}(EO)₁₁H | (Typ A) | 2,0 g |
| *i*-C₁₃(EO)₇H, | (Typ B) | 2,0 g |
| C_{16/18}(EO)₅₀H | (Typ C) | 0,8 g |
| VE-Wasser | | 11,8 g |
| 1,2 Propylenglykol | | 12,3 g |
| 2. Zugabe | | 20,4 g H₂O, 0,4 g KOH, 21,2 g PG |
| Aussehen (@ 23° C) | | 2 |
| pH-Wert (@ 23° C) | | 7,9 |
| Lageru ng (@ -10° C) | **1 Tag** | flüssig |
| Lagerung (@ -10° C) | **30 Tage** | viskos |
| Lageru ng (@ -20° C) | **19 Tage** | hochviskos |

**Tabelle 6: Ergebnisse der Beispiele und Vergleichsbeispiele mit Paraffininhibitor III**

| | **V10** | **Beispiel 6** |
|---|---|---|
| Paraffininhibitor III | 36,2 g | 36,2 g |
| C_{16/18}(EO)₁₁H (Typ A) | 3,5 g | 2,0 g |
| *i*-C₁₃(EO)₇H (Typ B) | - | 2,0 g |
| C_{16/18}(EO)₅₀H (Typ C) | 1,5 g | 0,8 g |
| VE-Wasser | 10,2 g | 10,3 g |
| 1,2 Propylenglycol | 10,6 g | 10,7 g |
| 2. Zugabe | 20,4 g H₂O, 0,4 g KOH, 21,2 g PG | 20,4 g H₂O, 0,4 g KOH, 21,2 g PG |
| Aussehen (@ 23° C) sofort | 1 | 1 |
| pH-Wert (@ 23° C) | 7,0 | 7,0 |
| Lagerung (@ -10° C) 30 Tage | hoch viskos | flüssig |
| Lagerung (@ -20° C)19 Tage | fest | hochviskos |
| Bemerkungen | Nur zwei Tenside | |

**Tabelle 7: Ergebnis mit Paraffininhibitor IV**

| | | **Beispiel 7** |
|---|---|---|
| Paraffininhibitor IV | | 34,9 g |
| C_{16/18}(EO)₁₁H | (Typ A) | 2,0 g |
| *i*-C₁₃(EO)₇H | (Typ B) | 2,0 g |
| C_{16/18}(EO)₅₀H | (Typ C) | 0,8 g |
| VE-Wasser | | 9,5 g |
| 1,2 Propylenglykol | | 10,0 g |
| 2. Zugabe | | 20,4 g H₂O, 0,4 g KOH, 21,2 g PG |
| Aussehen (@ 23° C) | | 1 |
| pH-Wert (@ 23° C) | | 7,2 |
| Lagerung (@ 23° C) | **30 Tage** | stabil |
| Lagerung (@ -20° C) | **30 Tage** | viskos |

### Kommentare zu den Versuchen:

Bei allen Versuchen und Vergleichsversuchen betrug die Konzentration des Pour-Point-Depressants ca. 25 Gew.-% bzgl. der Summe aller Komponenten der Dispersion, d.h. eine praxisrelevante Konzentration.

Die Vergleichsversuche V1 und V2 wurden nur unter Verwendung eines Tensids A (C_{16/18}(EO)₁₁H) in einer Menge von ca. 7 Gew.-% bezüglich der Summe aller Komponenten der Dispersion durchgeführt. Die Dispersionen sind bei Raumtemperatur zwar flüssig, die Qualität ist aber nicht sehr gut (stippig). Beim Lagern bei -10° C sind die Dispersionen nach 4 Tagen fest.

Bei den Vergleichsversuchen V3 und V4 wurde zusätzlich zum Tensid A (C_{16/18}(EO)₁₁H) noch eine geringe Menge eines Tensids vom Typ C (C_{16/18}(EO)₅₀H) zugegeben. Dies verbessert die Qualität der Dispersion bei Raumtemperatur deutlich, kann aber das Festwerden der Dispersion beim Lagern bei -10° C nicht verhindern.

Bei den Vergleichsversuchen V5 bis V9 wurde die Menge des Tensids A variiert. Bei einer geringen Menge (ca. 3,5 Gew.-% bzgl. der Summe aller Komponenten) ist die Dispersion zwar beim Lagern bei -10° C auch nach 21 Tagen noch flüssig (hochviskos), aber die Qualität der Dispersion ist bereits bei Raumtemperatur schlecht, es zeigt sich beginnende Phasentrennung (Aufrahmen). Bei nur 2 Gew.-% Tensid A (V9) trennt sich die Dispersion bereits bei Raumtemperatur wieder. Mit zunehmender Menge des Tensids A nimmt die Qualität der Dispersion bei Raumtemperatur zwar zu, aber sie wird auch schneller fest, bei hohen Tensidkonzentrationen bereits beim Lagern bei + 5 ° C.

In den Beispielen 1 und 2 wurde nun ein Teil des Tensids A durch Tensid B ersetzt. Tensid C ist nach wie vor vorhanden. Die Kombination der 3 Tenside ergibt eine Dispersion, die sowohl eine gute Qualität aufweist, als auch beim Lagern bei - 10° C flüssig bleibt; die Dispersion von Beispiel 1 bleibt selbst beim Lagern bei - 20° C noch flüssig.

Die Beispiele 3 und 4 (Tabelle 4) zeigen den Effekt, wenn man die Dispersion zusätzlich homogenisiert. Hierdurch wird eine Dispersion mit deutlich verbesserter Qualität erhalten.

Die Tabellen 5 bis 7 zeigen, dass stabile Emulsionen, welche beim Lagern bei tiefen Temperaturen flüssig bleiben, auch mit anderen Paraffininhibitoren erreicht werden können.

## Patentansprüche

1. Wässrige Zusammensetzung umfassend mindestens
(1) eine kontinuierliche wässrige Phase umfassend Wasser sowie ein mit Wasser mischbares organisches Lösemittel,
(2) darin verteilte Partikel einer Paraffininhibitor-Komponente mit einem Schmelzpunkt von 30° C bis 95° C, sowie
(3) Tenside,
**dadurch gekennzeichnet, dass**
• die wässrige Phase einen Schmelzpunkt von nicht mehr als -20° C aufweist,
• es sich bei der Paraffininhibitor-Komponente um eine Mischung umfassend mindestens
o ein organisches, mit Wasser nicht mischbares Lösemittel, sowie
o einen polymeren, wasserunlöslichen Paraffininhibitor (X) handelt, umfassend als Monomere
▪ α-Olefine mit 14 bis 32 Kohlenstoffatomen, sowie
▪ monoethylenisch ungesättigte Monomere umfassend Carboxylatgruppen handelt, wobei die Carboxylatgruppen ganz oder teilweise mit aliphatischen, cycloaliphatischen und/oder aromatischen Alkoholen verestert sind, mit der Maßgabe, dass es sich bei mindestens 50 mol % der Alkohole um lineare aliphatische Alkohole mit 16 bis 32 Kohlenstoffatomen handelt,
• die Menge der Paraffininhibitor-Komponente 20 bis 40 Gew.-% bezogen auf die Summe aller Komponenten der Zusammensetzung beträgt,
• es sich bei den Tensiden mindestens um drei voneinander verschiedene Tenside (A), (B) und (C) handelt, welche wie folgt definiert sind:
(A) mindestens ein nichtionisches Tensid der allgemeinen Formel R¹-(AO)ₓH, wobei
▪ es sich bei R¹ um einen linearen Alkylrest mit 8 bis 20 Kohlenstoffatomen handelt,
▪ AO unabhängig voneinander für C₂- bis C₄-Alkylenoxideinheiten stehen, mit der Maßgabe, dass es sich bei mindestens 80 mol % der AO-Einheiten um Ethylenoxideinheiten (EO) handelt, und
▪ x für eine Zahl von 5 bis 20 steht,
(B) mindestens ein Tensid ausgewählt aus der Gruppe von
(B1) nichtionischen Tensiden der allgemeinen Formel R²-(AO)_{y}H, wobei
▪ es sich bei R¹ um einen verzweigten Alkylrest mit 8 bis 20 Kohlenstoffatomen handelt,
▪ AO unabhängig voneinander für C₂- bis C₄-Alkylenoxideinheiten stehen, mit der Maßgabe, dass es sich bei mindestens 80 mol % der AO-Einheiten um Ethylenoxideinheiten (EO) handelt, und
▪ y für eine Zahl von 5 bis 20 steht,
(B2) nichtionischen Tensiden der allgemeinen Formel R³-CH₂-N[-(AO)_{z}H]₂, wobei
▪ es sich bei R³ um einen linearen Alkylrest oder Alkenylrest mit 8 bis 20 Kohlenstoffatomen handelt,
▪ AO unabhängig voneinander für C₂- bis C₄-Alkylenoxideinheiten stehen, mit der Maßgabe, dass es sich bei mindestens 80 mol % der AO-Einheiten um Ethylenoxideinheiten (EO) handelt, und
▪ z für eine Zahl von 3 bis 10 steht,
(C) mindestens ein nichtionisches Tensid der allgemeinen Formel R⁴-(AO)ₘH, wobei
▪ es sich bei R⁴ um einen linearen Alkylrest mit 8 bis 20 Kohlenstoffatomen handelt,
▪ AO unabhängig voneinander für C₂- bis C₄-Alkylenoxideinheiten stehen, mit der Maßgabe, dass es sich bei mindestens 80 mol % der AO-Einheiten um Ethylenoxideinheiten (EO) handelt, und
▪ m für eine Zahl von mehr als 20 bis 70 steht,
und wobei die Menge der Tenside (A) 5 bis 15 Gew.-%, die der Tenside (B) 5 bis 15 Gew.-% und die der Tenside (C) 2 bis 5 Gew.-%, jeweils bezogen auf die Paraffininhibitor-Komponente beträgt.

2. Wässrige Zusammensetzung gemäß Anspruch 1, **dadurch gekennzeichnet, dass** die Tenside (A), (B), (C) wie folgt definiert sind:
(A) : mindestens ein nichtionisches Tensid der allgemeinen Formel R¹-(EO)ₓH, wobei
• es sich bei R¹ um einen linearen Alkylrest mit 12 bis 20 Kohlenstoffatomen, und
• bei EO um Ethylenoxideinheiten handelt, und
• x für eine Zahl von 8 bis 15 steht,
(B): mindestens ein Tensid ausgewählt aus der Gruppe von
(B1): nichtionischen Tensiden der allgemeinen Formel R²-(EO)_{y}H, wobei
• es sich bei R¹ um einen verzweigten Alkylrest mit 11 bis 17 Kohlenstoffatomen, und
• bei EO um Ethylenoxideinheiten handelt, und
• y für eine Zahl von 5 bis 15 steht,
(B2): nichtionischen Tensiden der allgemeinen Formel R³-CH₂-N[-(EO)_{z}H]₂, wobei
• es sich bei R³ um einen linearen Alkenylrest mit 12 bis 20 Kohlenstoffatomen, und
• bei EO um Ethylenoxideinheiten handelt, und
• z für eine Zahl von 4 bis 8 steht,
(C) : mindestens ein nichtionisches Tensid der allgemeinen Formel R⁴-(EO)ₘH, wobei
• es sich bei R⁴ um einen linearen Alkylrest mit 12 bis 20 Kohlenstoffatomen handelt, und
• bei EO um Ethylenoxideinheiten handelt, und
• m für eine Zahl von 40 bis 60 steht.

3. Wässrige Zusammensetzung gemäß Anspruch 1 oder 2, **dadurch gekennzeichnet, dass** die Gesamtmenge der Tenside 15 bis 25 Gew.-% beträgt.

4. Wässrige Zusammensetzung gemäß einem der Ansprüche 1 bis 3, **dadurch gekennzeichnet, dass** die Paraffininhibitor-Komponente einen Schmelzpunkt von 40 bis 70° C aufweist.

5. Wässrige Zusammensetzung gemäß einem der Ansprüche 1 bis 4, **dadurch gekennzeichnet, dass** die Paraffininhibitor-Komponente eine Partikelgröße von 1 µm bis 10 µm aufweist.

6. Wässrige Zusammensetzung gemäß einem der Ansprüche 1 bis 5, **dadurch gekennzeichnet, dass** es sich bei dem organischen Lösemittel um mindestens eines ausgewählt aus der Gruppe von Methanol, Ethanol, n-Propanol, i-Propanol, Ethylenglykol, Diethylenglykol, 1,2-Propylenglykol, 1,3-Propylenglykol Ethylenglykolmonomethylether oder Propylenglykolmonomethylether handelt.

7. Wässrige Zusammensetzung gemäß einem der Ansprüche 1 bis 5, **dadurch gekennzeichnet, dass** es sich bei dem organischen Lösemittel um mindestens eines ausgewählt aus der Gruppe von Ethylenglykol, Diethylenglykol, 1,2-Propylenglykol, 1,3-Propylenglykol Ethylenglykolmonomethylether oder Propylenglykolmonomethylether handelt.

8. Wässrige Zusammensetzung gemäß einem der Ansprüche 1 bis 7, **dadurch gekennzeichnet, dass** die Menge der organischen Lösemittel 30 bis 70 Gew. % bezüglich der Menge aller Komponenten der wässrigen Phase beträgt.

9. Wässrige Zusammensetzung gemäß einem der Ansprüche 1 bis 5, **dadurch gekennzeichnet, dass** die wässrige Phase Wasser sowie 1,2-Propylenglykol und/oder Ethylenglykol umfasst, wobei der Anteil an 1,2-Propylenglykol und/oder Ethylenglykol 40 bis 60 Gew.-% beträgt, und es sich bei dem Rest der wässrigen Phase um Wasser handelt.

10. Wässrige Zusammensetzung gemäß einem der Ansprüche 1 bis 9, **dadurch gekennzeichnet, dass** die Paraffininhibitor-Komponente 60 Gew.-% bis 90 Gew.-% an polymeren Paraffininhibitoren (X) sowie 10 Gew.-% bis 40 Gew.-% organischer, mit Wasser nicht mischbarer Lösemittel umfasst, wobei die Gewichtsangaben auf die Summe alle Komponenten der Paraffininhibitorkomponente bezogen sind.

11. Wässrige Zusammensetzung gemäß einem der Ansprüche 1 bis 10, **dadurch gekennzeichnet, dass** es sich bei dem organischen, mit Wasser nicht mischbaren Lösemittel um Kohlenwasserstoffe bzw. Kohlenwasserstoffgemische handelt.

12. Wässrige Zusammensetzung gemäß einem der Ansprüche 1 bis 11, **dadurch gekennzeichnet, dass** es sich bei dem polymeren Paraffininhibitor (X) um ein Copolymer umfassend als Monomere
• 40 bis 60 mol-% α-Olefine mit 14 bis 32 Kohlenstoffatomen, sowie
• 60 bis 40 mol-% Maleinsäure, wobei die Carboxylatgruppen ganz oder teilweise mit aliphatischen, cycloaliphatischen und/oder aromatischen Alkoholen verestert sind, mit der Maßgabe, dass es sich bei mindestens 50 mol % der Alkohole um lineare aliphatische Alkohole mit 16 bis 32 Kohlenstoffatomen handelt, und wobei der Veresterungsgrad 30 bis 60 % bezüglich der Anzahl aller vorhandenen Carboxylatgruppen beträgt.

13. Verfahren zur Herstellung einer wässrigen Zusammensetzung gemäß einem der Ansprüche 1 bis 12, **dadurch gekennzeichnet, dass** man die Paraffininhibitor-Komponente(n) aufschmilzt, unter Zugabe der Tenside (A), (B) und (C) bei einer Temperatur oberhalb der Schmelztemperatur der Paraffininhibitor-Komponente in der wässrigen Phase verteilt, und man die Mischung anschließend auf eine Temperatur unterhalb der Schmelztemperatur der Paraffininhibitor-Komponente abkühlen lässt.

14. Verfahren zur Herstellung einer wässrigen Zusammensetzung gemäß Anspruch 13, **dadurch gekennzeichnet, dass** man zum Verteilen der geschmolzenen Paraffininhibitor-Komponente Rühr- oder Dispergieraggregate ausgewählt aus der Gruppe von Rührern, Propellerrührern, Kolloidmühlen, Ultraturrax-Geräten, Ultraschallgeneratoren, Homogenisatoren oder Kombinationen davon einsetzt.

15. Verfahren gemäß Anspruch 13, **dadurch gekennzeichnet, dass** die Herstellung erfolgt, indem man
• in einer ersten Stufe eine festen Paraffininhibitor-Komponente, die Tenside (A), (B) und (C) und mindestens ein Teil der wässrigen Phase bei einer Temperatur unterhalb der Schmelztemperatur der Paraffininhibitor-Komponente miteinander vermischt und hiernach unter fortgesetztem Vermischen auf eine Temperatur oberhalb der Schmelztemperatur erwärmt,
• in einer zweiten Stufe die Mischung unter Verwendung eines geeigneten Dispergieraggregates homogenisiert, und
• die Mischung anschließend auf eine Temperatur unterhalb der Schmelztemperatur der Paraffininhibitor-Komponente abkühlen lasst.

16. Verfahren gemäß Anspruch 15, **dadurch gekennzeichnet, dass** das Vermischen in der ersten Stufe mittels Rühren erfolgt.

17. Verfahren gemäß Anspruch 15 oder 16, **dadurch gekennzeichnet, dass** man in der zweiten Stufe als Dispergieraggregat einen Homogenisator einsetzt.

18. Verwendung von wässrigen Zusammensetzungen gemäß einem der Ansprüche 1 bis 12 als Pour-Point-Depressants für Rohöl, indem man dem Rohöl mindestens eine wässrige Zusammensetzung gemäß einem der Ansprüche 1 bis 12 zusetzt.

19. Verwendung gemäß Anspruch 18, **dadurch gekennzeichnet, dass** die wässrige Zusammensetzung in einer solchen Menge eingesetzt wird, dass die zugesetzte Menge der Paraffininhibitoren (X) 50 bis 1500 ppm bezüglich des Rohöls beträgt.

20. Verwendung gemäß Anspruch 18 oder 19, **dadurch gekennzeichnet, dass** man die wässrige Zusammensetzung in eine Rohölpipeline injiziert.

21. Verwendung gemäß Anspruch 18 oder 19, **dadurch gekennzeichnet, dass** man die wässrige Zusammensetzung in eine Produktionsbohrung injiziert.

22. Verwendung gemäß Anspruch 20 oder 21, **dadurch gekennzeichnet, dass** die Injektion offshore erfolgt.

23. Verwendung gemäß einem der Ansprüche 20 bis 22, **dadurch gekennzeichnet, dass** die Injektion umbilical vorgenommen wird.

24. Verwendung von wässrigen Zusammensetzungen gemäß einem der Ansprüche 1 bis 12 zur Vermeidung von Wachsablagerungen auf Oberflächen, welche in Kontakt mit Rohöl sind, indem man dem Rohöl mindestens eine wässrige Zusammensetzung gemäß einem der Ansprüche 1 bis 12 zusetzt.

## Claims

1. An aqueous composition comprising at least
(1) a continuous aqueous phase comprising water and a water-miscible organic solvent,
(2) particles of a paraffin inhibitor component having a melting point of 30°C to 95°C that are distributed therein, and
(3) surfactants,
wherein
• the aqueous phase has a melting point of not more than -20°C,
• the paraffin inhibitor component is a mixture comprising at least
o an organic, water-immiscible solvent, and
o a polymeric, water-insoluble paraffin inhibitor (X) comprising, as monomers,
▪ α-olefins having 14 to 32 carbon atoms, and
▪ monoethylenically unsaturated monomers comprising carboxylate groups, where some or all of the carboxylate groups have been esterified with aliphatic, cycloaliphatic and/or aromatic alcohols, with the proviso that at least 50 mol% of the alcohols are linear aliphatic alcohols having 16 to 32 carbon atoms,
• the amount of the paraffin inhibitor component is 20% to 40% by weight, based on the sum total of all the components of the composition,
• the surfactants are at least three different surfactants (A), (B) and (C) which are defined as follows:
(A) at least one nonionic surfactant of the general formula R¹-(AO)ₓH where
▪ R¹ is a linear alkyl radical having 8 to 20 carbon atoms,
▪ AO are independently C₂- to C₄-alkylene oxide units, with the proviso that at least 80 mol% of the AO units are ethylene oxide units (EO), and
▪ x is a number from 5 to 20,
(B) at least one surfactant selected from the group of
(B1) nonionic surfactants of the general formula R²- (AO)_{y}H where
▪ R¹ is a branched alkyl radical having 8 to 20 carbon atoms,
▪ AO are independently C₂- to C₄-alkylene oxide units, with the proviso that at least 80 mol% of the AO units are ethylene oxide units (EO), and
▪ y is a number from 5 to 20,
(B2) nonionic surfactants of the general formula R³-CH₂-N[-(AO)_{z}H]₂ where
▪ R³ is a linear alkyl radical or alkenyl radical having 8 to 20 carbon atoms,
▪ AO are independently C₂- to C₄-alkylene oxide units, with the proviso that at least 80 mol% of the AO units are ethylene oxide units (EO), and
▪ z is a number from 3 to 10,
(C) at least one nonionic surfactant of the general formula R⁴-(AO)ₘH where
▪ R⁴ is a linear alkyl radical having 8 to 20 carbon atoms,
▪ AO are independently C₂- to C₄-alkylene oxide units, with the proviso that at least 80 mol% of the AO units are ethylene oxide units (EO), and
▪ m is a number from more than 20 to 70,
and where the amount of the surfactants (A) is 5% to 15% by weight, that of the surfactants (B) from 5% to 15% by weight, and that of the surfactants (C) from 2% to 5% by weight, based in each case on the paraffin inhibitor component.

2. The aqueous composition according to claim 1, wherein the surfactants (A), (B), (C) are defined as follows:
(A) : at least one nonionic surfactant of the general formula R¹-(EO)ₓH where
• R¹ is a linear alkyl radical having 12 to 20 carbon atoms, and
• EO is ethylene oxide units, and
• x is a number from 8 to 15,
(B) : at least one surfactant selected from the group of
(B1): nonionic surfactants of the general formula R²- (EO)_{y}H where
• R¹ is a branched alkyl radical having 11 to 17 carbon atoms, and
• EO is ethylene oxide units, and
• y is a number from 5 to 15,
(B2): nonionic surfactants of the general formula R³-CH₂-N[-(EO)_{z}H]₂ where
• R³ is a linear alkenyl radical having 12 to 20 carbon atoms, and
• EO is ethylene oxide units, and
• z is a number from 4 to 8,
(C) : at least one nonionic surfactant of the general formula R⁴-(EO)ₘH where
• R⁴ is a linear alkyl radical having 12 to 20 carbon atoms, and
• EO is ethylene oxide units, and
• m is a number from 40 to 60.

3. The aqueous composition according to claim 1 or 2, wherein the total amount of the surfactants is 15% to 25% by weight.

4. The aqueous composition according to any of claims 1 to 3, wherein the paraffin inhibitor component has a melting point of 40 to 70°C.

5. The aqueous composition according to any of claims 1 to 4, wherein the paraffin inhibitor component has a particle size of 1 µm to 10 µm.

6. The aqueous composition according to any of claims 1 to 5, wherein the organic solvent is at least one selected from the group of methanol, ethanol, n-propanol, i-propanol, ethylene glycol, diethylene glycol, 1,2-propylene glycol, 1,3-propylene glycol, ethylene glycol monomethyl ether or propylene glycol monomethyl ether.

7. The aqueous composition according to any of claims 1 to 5, wherein the organic solvent is at least one selected from the group of ethylene glycol, diethylene glycol, 1,2-propylene glycol, 1,3-propylene glycol, ethylene glycol monomethyl ether or propylene glycol monomethyl ether.

8. The aqueous composition according to any of claims 1 to 7, wherein the amount of the organic solvents is 30% to 70% by weight, based on the amount of all components of the aqueous phase.

9. The aqueous composition according to any of claims 1 to 5, wherein the aqueous phase comprises water and 1,2-propylene glycol and/or ethylene glycol, where the proportion of 1,2-propylene glycol and/or ethylene glycol is 40% to 60% by weight, and the remainder of the aqueous phase is water.

10. The aqueous composition according to any of claims 1 to 9, wherein the paraffin inhibitor component comprises 60% by weight to 90% by weight of polymeric paraffin inhibitors (X) and 10% by weight to 40% by weight of organic, water-immiscible solvents, where the weight figures are based on the sum total of all components of the paraffin inhibitor component.

11. The aqueous composition according to any of claims 1 to 10, wherein the organic, water-immiscible solvent comprises hydrocarbons or hydrocarbon mixtures.

12. The aqueous composition according to any of claims 1 to 11, wherein the polymeric paraffin inhibitor (X) is a copolymer comprising, as monomers,
• 40 to 60 mol% of α-olefins having 14 to 32 carbon atoms, and
• 60 to 40 mol% of maleic acid, where some or all of the carboxylate groups have been esterified with aliphatic, cycloaliphatic and/or aromatic alcohols, with the proviso that at least 50 mol% of the alcohols are linear aliphatic alcohols having 16 to 32 carbon atoms, and where the degree of esterification is 30% to 60% based on the number of all carboxylate groups present.

13. A process for producing an aqueous composition according to any of claims 1 to 12, which comprises melting the paraffin inhibitor component(s), distributing them in the aqueous phase, with addition of the surfactants (A), (B) and (C), at a temperature above the melting temperature of the paraffin inhibitor component under, and then allowing the mixture to cool down to a temperature below the melting temperature of the paraffin inhibitor component.

14. The process for producing an aqueous composition according to 13, wherein distribution of the molten paraffin inhibitor component is accomplished using stirring or dispersing units selected from the group of stirrers, propeller stirrers, colloid mills, Ultraturrax systems, ultrasound generators, homogenizers or combinations thereof.

15. The process according to claim 13, wherein the production is effected by
• in a first stage mixing a solid paraffin inhibitor component, surfactants (A), (B) and (C) and at least a portion of the aqueous phase with one another at a temperature below the melting temperature of the paraffin inhibitor component, and then heating them to a temperature above the melting temperature with continued mixing,
• in a second stage homogenizing the mixture using a suitable dispersing unit, and
• then allowing the mixture to cool down to a temperature below the melting temperature of the paraffin inhibitor component.

16. The process according to claim 15, wherein the mixing in the first stage is effected by means of stirring.

17. The process according to claim 15 or 16, wherein the dispersing unit used in the second stage is a homogenizer.

18. The use of aqueous compositions according to any of claims 1 to 12 as pour point depressants for crude oil, by adding at least one aqueous composition according to any of claims 1 to 12 to the crude oil.

19. The use according to claim 18, wherein the aqueous composition is used in such an amount that the amount of the paraffin inhibitors (X) added is 50 to 1500 ppm based on the crude oil.

20. The use according to claim 18 or 19, wherein the aqueous composition is injected into a crude oil pipeline.

21. The use according to claim 18 or 19, wherein the aqueous composition injects into a production well.

22. The use according to claim 20 or 21, wherein the injection is effected offshore.

23. The use according to any of claims 20 to 22, wherein the injection is undertaken in an umbilical manner.

24. The use of aqueous compositions according to any of claims 1 to 12 for prevention of wax deposits on surfaces that are in contact with crude oil, by adding at least one aqueous composition according to any of claims 1 to 12 to the crude oil.

## Revendications

1. Composition aqueuse, comprenant au moins
(1) une phase aqueuse continue comprenant de l'eau ainsi qu'un solvant organique miscible à l'eau,
(2) des particules qui y sont réparties d'un composant inhibiteur de paraffine présentant un point de fusion de 30°C à 95°C, ainsi que
(3) des tensioactifs
**caractérisée en ce que**
- la phase aqueuse présente un point de fusion qui n'est pas supérieur à -20°C,
- le composant inhibiteur de paraffine est un mélange comprenant au moins
- un solvant organique, non miscible à l'eau, ainsi que
- un inhibiteur de paraffine (X) polymère, insoluble dans l'eau, comprenant comme monomères
- des α-oléfines comprenant 14 à 32 atomes de carbone ainsi que
- des monomères éthyléniquement mono-insaturés comprenant des groupes carboxylate, les groupes carboxylate étant estérifiés totalement ou partiellement par des alcools aliphatiques, cycloaliphatiques et/ou aromatiques, sous réserve qu'il s'agisse, pour au moins 50% en mole des alcools, d'alcools aliphatiques linéaires comprenant 16 à 32 atomes de carbone,
- la quantité de composant inhibiteur de paraffine est de 20 à 40% en poids par rapport à la somme de tous les composants de la composition,
- il s'agit, pour les tensioactifs, d'au moins trois tensioactifs (A), (B) et (C) différents les uns des autres, qui sont définis comme suit
(A) au moins un tensioactif non ionique de formule générale R¹-(OA)ₓH, dans laquelle
- R¹ représente un radical alkyle linéaire comprenant 8 à 20 atomes de carbone,
- les radicaux OA représentent, indépendamment les uns des autres, des motifs d'oxyde d'alkylène en C₂ à C₄, sous réserve qu'il s'agisse, pour au moins 80% en mole des motifs OA, de motifs d'oxyde d'éthylène (OE), et
- x représente un nombre de 5 à 20,
(B) au moins un tensioactif choisi dans le groupe formé par
(B1) les tensioactifs non ioniques de formule générale R²-(OA)_{y}H, dans laquelle
- R¹ représente un radical alkyle ramifié comprenant 8 à 20 atomes de carbone,
- les radicaux OA représentent, indépendamment les uns des autres, des motifs d'oxyde d'alkylène en C₂ à C₄, sous réserve qu'il s'agisse, pour au moins 80% en mole des motifs OA, de motifs d'oxyde d'éthylène (OE), et
- y représente un nombre de 5 à 20,
(B2) les tensioactifs non ioniques de formule générale R³-CH₂-N[-(OA)_{z}H]₂, dans laquelle
- R³ représente un radical alkyle ou alcényle linéaire comprenant 8 à 20 atomes de carbone,
- les radicaux OA représentent, indépendamment les uns des autres, des motifs d'oxyde d'alkylène en C₂ à C₄, sous réserve qu'il s'agisse, pour au moins 80% en mole des motifs OA, de motifs d'oxyde d'éthylène (OE), et
- z représente un nombre de 3 à 10,
(C) au moins un tensioactif non ionique de formule générale R⁴-(OA)ₘH, dans laquelle
- R⁴ représente un radical alkyle linéaire comprenant 8 à 20 atomes de carbone,
- les radicaux OA représentent, indépendamment les uns des autres, des motifs d'oxyde d'alkylène en C₂ à C₄, sous réserve qu'il s'agisse, pour au moins 80% en mole des motifs OA, de motifs d'oxyde d'éthylène (OE), et
- m représente un nombre de plus de 20 à 70,
et la quantité des tensioactifs (A) représente 5 à 15% en poids, celle des tensioactifs (B) représente 5 à 15% en poids et celle des tensioactifs (C) représente 2 à 5% en poids, à chaque fois par rapport au composant inhibiteur de paraffine.

2. Composition aqueuse selon la revendication 1, **caractérisée en ce que** les tensioactifs (A), (B), (C) sont définis comme suit :
(A) : au moins un tensioactif non ionique de formule générale R¹-(OE)ₓH, dans laquelle
- R¹ représente un radical alkyle linéaire comprenant 12 à 20 atomes de carbone,
- OE représente des motifs d'oxyde d'éthylène et
- x représente un nombre de 8 à 15,
(B) : au moins un tensioactif choisi dans le groupe formé par
(B1) : les tensioactifs non ioniques de formule générale R²-(OE)_{y}H, dans laquelle
- R¹ représente un radical alkyle ramifié comprenant 11 à 17 atomes de carbone et
- OE représente des motifs d'oxyde d'éthylène et
- y représente un nombre de 5 à 15,
(B2) : les tensioactifs non ioniques de formule générale R³-CH₂-N[-(OE)_{z}H]₂, dans laquelle
- R³ représente un radical alcényle linéaire comprenant 12 à 20 atomes de carbone et
- OE représente des motifs d'oxyde d'éthylène et
- z représente un nombre de 4 à 8,
(C) : au moins un tensioactif non ionique de formule générale R⁴-(OE)ₘH, dans laquelle
- R⁴ représente un radical alkyle linéaire comprenant 12 à 20 atomes de carbone et
- OE représente des motifs d'oxyde d'éthylène et
- m représente un nombre de 40 à 60.

3. Composition aqueuse selon la revendication 1 ou 2, **caractérisée en ce que** la quantité totale des tensioactifs représente 15 à 25% en poids.

4. Composition aqueuse selon l'une quelconque des revendications 1 à 3, **caractérisée en ce que** le composant inhibiteur de paraffine présente un point de fusion de 40 à 70 °C.

5. Composition aqueuse selon l'une quelconque des revendications 1 à 4, **caractérisée en ce que** le composant inhibiteur de paraffine présente une grosseur de particules de 1 µm à 10 µm.

6. Composition aqueuse selon l'une quelconque des revendications 1 à 5, **caractérisée en ce qu'**il s'agit, pour le solvant organique, d'au moins un solvant choisi dans le groupe formé par le méthanol, l'éthanol, le n-propanol, l'i-propanol, l'éthylèneglycol, le diéthylèneglycol, le 1,2-propylèneglycol, le 1,3-propylèneglycol, l'éthylèneglycolmonométhyléther ou le propylèneglycolmonométhyléther.

7. Composition aqueuse selon l'une quelconque des revendications 1 à 5, **caractérisée en ce qu'**il s'agit, pour le solvant organique, d'au moins un solvant choisi dans le groupe formé par l'éthylèneglycol, le diéthylèneglycol, le 1,2-propylèneglycol, le 1,3-propylèneglycol, l'éthylèneglycolmonométhyléther ou le propylèneglycolmonométhyléther.

8. Composition aqueuse selon l'une quelconque des revendications 1 à 7, **caractérisée en ce que** la quantité de solvants organiques représente 30 à 70% en poids par rapport à la quantité de tous les composants de la phase aqueuse.

9. Composition aqueuse selon l'une quelconque des revendications 1 à 5, **caractérisée en ce que** la phase aqueuse comprend de l'eau ainsi que du 1,2-propylèneglycol et/ou de l'éthylèneglycol, la proportion de 1,2-propylèneglycol et/ou d'éthylèneglycol représentant 40 à 60% en poids et le reste de la phase aqueuse étant de l'eau.

10. Composition aqueuse selon l'une quelconque des revendications 1 à 9, **caractérisée en ce que** le composant inhibiteur de paraffine comprend 60% en poids à 90% en poids d'inhibiteurs de paraffine (X) polymères ainsi que 10% en poids à 40% en poids de solvants organiques, non miscibles à l'eau, les indications en poids se rapportant à la somme de tous les composants du composant inhibiteur de paraffine.

11. Composition aqueuse selon l'une quelconque des revendications 1 à 10, **caractérisée en ce qu'**il s'agit, pour le solvant organique, non miscible à l'eau, d'hydrocarbures ou de mélanges hydrocarbonés.

12. Composition aqueuse selon l'une quelconque des revendications 1 à 11, **caractérisée en ce qu'**il s'agit, pour l'inhibiteur de paraffine (X) polymère, d'un copolymère comprenant comme monomères
- 40 à 60% en mole d'a-oléfines comprenant 14 à 32 atomes de carbone ainsi que
- 60 à 40% en mole d'acide maléique, les groupes carboxylate étant estérifiés totalement ou partiellement par des alcools aliphatiques, cycloaliphatiques et/ou aromatiques, sous réserve qu'il s'agisse, pour au moins 50% en mole des alcools, d'alcools aliphatiques linéaires comprenant 16 à 32 atomes de carbone et le degré d'estérification étant de 30 à 60%, par rapport au nombre de tous les groupes carboxylate présents.

13. Procédé pour la préparation d'une composition aqueuse selon l'une quelconque des revendications 1 à 12, **caractérisé en ce qu'**on fait fondre le(s) composant(s) inhibiteur(s) de paraffine, on les répartit avec addition des tensioactifs (A), (B) et (C) à une température supérieure à la température de fusion des composants inhibiteurs de paraffine dans la phase aqueuse et on laisse ensuite refroidir le mélange à une température inférieure à la température de fusion des composants inhibiteurs de paraffine.

14. Procédé pour la préparation d'une composition aqueuse selon la revendication 13, **caractérisé en ce que**, pour la répartition des composants inhibiteurs de paraffine fondus, on utilise des appareils d'agitation ou de dispersion choisis dans le groupe des agitateurs, des agitateurs à hélice, des broyeurs colloïdaux, des appareils de type Ultraturrax, des générateurs d'ultrasons, des homogénéisateurs ou leurs combinaisons.

15. Procédé selon la revendication 13, **caractérisé en ce que** la préparation est réalisée **en ce que**
- dans une première étape, on mélange un composant solide inhibiteur de paraffine, les tensioactifs (A), (B) et (C) et au moins une partie de la phase aqueuse à une température inférieure à la température de fusion du composant inhibiteur de paraffine puis, tout en continuant le mélange, on chauffe à une température au-dessus de la température de fusion,
- dans une deuxième étape, on homogénéise le mélange en utilisant un appareil de dispersion approprié et
- on laisse ensuite refroidir le mélange à une température inférieure à la température de fusion du composant inhibiteur de paraffine.

16. Procédé selon la revendication 15, **caractérisé en ce que** le mélange dans la première étape a lieu par agitation.

17. Procédé selon la revendication 15 ou 16, **caractérisé en ce que**, dans la deuxième étape, on utilise un homogénéisateur comme appareil de dispersion.

18. Utilisation de compositions aqueuses selon l'une quelconque des revendications 1 à 12 comme agents améliorant le point d'écoulement pour le pétrole brut en ce qu'on ajoute au moins une composition aqueuse selon l'une quelconque des revendications 1 à 12 au pétrole brut.

19. Utilisation selon la revendication 18, **caractérisée en ce que** la composition aqueuse est utilisée en une quantité telle que la quantité ajoutée des inhibiteurs de paraffine (X) représente 50 à 1500 ppm par rapport au pétrole brut.

20. Utilisation selon la revendication 18 ou 19, **caractérisée en ce qu'**on injecte la composition aqueuse dans un pipeline à pétrole brut.

21. Utilisation selon la revendication 18 ou 19, **caractérisée en ce qu'**on injecte la composition aqueuse dans un trou de projection.

22. Utilisation selon la revendication 20 ou 21, **caractérisée en ce que** l'injection a lieu offshore.

23. Utilisation selon l'une quelconque des revendications 20 à 22, **caractérisée en ce que** l'injection est réalisée de manière ombilicale.

24. Utilisation de compositions aqueuses selon l'une quelconque des revendications 1 à 12 pour éviter des dépôts de cire sur des surfaces qui sont en contact avec du pétrole brut en ce qu'on ajoute au moins une composition aqueuse selon l'une quelconque des revendications 1 à 12 au pétrole brut.
